# EUROPÄISCHE PATENTANMELDUNG

(11) **EP 4 752 016 A1**
(43) Veröffentlichungstag der Anmeldung: **03.06.2026**
(21) Anmeldenummer: 25209280.4
(22) Anmeldetag: 16.10.2025
(51) Int. Cl.: B60T 13/36, B60T 13/66, B60T 17/16

(54) **BREMSZYLINDER, INSBESONDERE FÜR SCHIENENFAHRZEUGE**

(30) Priorität: 27.11.2024 DE 102024135041
(71) Anmelder: KB Intellectual Property GmbH & Co. KG, 82049 Pullach (DE)
(72) Erfinder: MÜLLEK, Ferenc, 8000 Szekesfehervar (HU); ELSTORPFF, Marc-Gregory, 80368 München (DE); ADAM, Zsolt, 2092 Budakeszi (HU); SZÜCS, Peter, 1052 Budapest (HU); CSEMEZ, Zoltan, 2030 Erd (HU); SKRIONYA, David, 1164 Budapest (HU)

(57) **Zusammenfassung**

Ein Bremszylinder, insbesondere für Schienenfahrzeuge, mit einem inner-halb eines Gehäuses (11) axial bewegbaren Betriebsbremskolben (1), wobei der Betriebsbremskolben (1) einen Spindelfortsatz (2) mit einem Gewinde (13) als Teil einer axial bewegbaren Spindel aufweist , wobei der Bremszylinder einen Verriegelungsvorrichtung (3) zur Bremskraftverriegelung mit einem Kupplungsmechanismus (4) mit zumindest zwei Kupp-lungen (8, 9) aufweist, wobei der Betriebsbremskolben (1) über eine Gewindeverbindung (15) mit einem ersten drehbar gelagerten Kupplungselement (5) des Kupplungsmechanismus (4) verbunden ist, welches durch eine erste der zwei Kupplungen (8) mit einem zweiten drehbar gelagerten Kupplungselement (6) des Kupplungsmechanismus (4) verbindbar ist, wobei das besagte zweite drehbar gelagerte Kupplungselement (6) durch die zweite der zwei Kupplungen (9) mit einem dritten Kupplungselement (7) verbindbar ist und wobei das zweite und dritte Kupplungselement (6, 7) derart ausgebildet sind, dass die Verbindung beider Kupplungselemente (6, 7) unter Ausbildung der zweiten Kupplung (9) durch Linearverschiebung zumindest eines der beiden Kupplungselemente (7) gegenüber dem anderen Kupplungselement (6) erfolgt.

## Beschreibung

Die Erfindung betrifft ein Bremszylinder, insbesondere für Schienenfahrzeuge, nach dem Oberbegriff des Anspruchs 1.

Die Erfindung bezieht sich auf einen Bremszylinder mit einer Verriegelungsvorrichtung zur Bremskraftverriegelung eines Betriebsbremskolbens, wie er u.a. in der EP 3 849 863 B1 näher beschrieben wird. In dieser Lösung erfolgt die Verriegelung durch eine Zahnradverzahnung. Diese Lösung hat sich grundsätzlich bewährt. Allerdings bedarf das Lösen eines solchen Ratschenmechanismus einer undefiniert hohen der Feststellbremskraft entgegenwirkenden Öffnungskraft, die von der tatsächlichen Position der Zähne der Sperrklinke zum Zeitpunkt der Bremsenfeststellung abhängt. Die Öffnungskraft weist somit eine hohe Streuung auf. Anders ausgedrückt hat die Ratsche ein Spiel gleich der Zahnlänge was zu einem Hubverlust und somit Bremskraftverlust führt.

Die Aufgabe der vorliegenden Erfindung ist daher das Bereitstellen eines Bremszylinders, welcher ein vollständiges Lösen bzw. Verriegelung der Axialbewegung des Betriebsbremskolbens mit einer definierteren Öffnungskraft bzw. Öffnungsdruck ermöglicht.

Die Aufgabe wird durch einen Bremszylinder mit den Merkmalen des Anspruchs 1 gelöst.

Der erfindungsgemäße Bremszylinder wird vorzugsweise in Schienenfahrzeugen verwendet. Der Bremszylinder weist ein Gehäuse auf und einen innerhalb des Gehäuses axial bewegbaren Betriebsbremskolben. Der besagte Betriebsbremskolben weist einen Spindelfortsatz mit einem Gewinde als Teil einer axial bewegbaren und gegen Drehen blockierbaren Spindel auf. Der Bremszylinder weist überdies eine Verriegelungsvorrichtung zur Bremskraftverriegelung mit einem Kupplungsmechanismus auf. Der Kupplungsmechanismus weist zumindest zwei Kupplungen auf. Der Betriebsbremskolben ist über eine Gewindeverbindung mit einem ersten drehbar gelagerten Kupplungselement des Kupplungsmechanismus verbunden. Das Kupplungselement ist sodann durch die erste Kupplung mit einem zweiten drehbar gelagerten Kupplungselement des Kupplungsmechanismus verbunden. Das besagte zweite drehbar gelagerte Kupplungselement ist durch eine zweite Kupplung der besagten zwei Kupplungen mit einem dritten Kupplungselement verbindbar.

Erfindungsgemäß sind das zweite und dritte Kupplungselement derart ausgebildet, dass die kraftschlüssige Verbindung beider Kupplungselemente unter Ausbildung bzw. Schließen der zweiten Kupplung durch Linearverschiebung zumindest eines der beiden Kupplungselemente gegenüber dem anderen Kupplungselement erfolgt.

Durch die Bereitstellung der vorgenannten Doppelkupplung durch Linearverschiebung kann ein leichtes Sperren und Lösen des Betriebsbremskolbens in einer linearen Bewegung mit einer definierten Kraft erfolgen, während der Betriebsbremskolben in der Gegenrichtung unabhängig vom Kupplungszustand frei beweglich ist.

Vorteilhafte Ausgestaltungen der Erfindung sind Gegenstand der Unteransprüche.

Es ist von Vorteil, wenn das dritte Kupplungselement als ein linear verschiebbar gelagertes, vorzugsweise verdrehgesichertes, Kupplungselement ausgebildet ist. Das dritte Kupplungselement ist vorzugsweise nicht drehbar ausgebildet. Dadurch wird eine Übertragung der Drehbewegung vom zweiten auf das dritte Kupplungselement vermieden und damit eine Verdrehung des Kupplungsmechanismus innerhalb des Gehäuses.

Das erste drehbar gelagerte Kupplungselement ist vorteilhaft als eine Hülse mit einem Innengewinde ausgebildet, welche gemeinsam mit dem Gewinde des Spindelfortsatzes die Gewindeverbindung bildet, wobei die Gewindeverbindung als eine nicht-selbsthemmende Gewindeverbindung ausgebildet ist. Dadurch ist eine maschinell einfache Lösung bei geringer Zahl bewegter Teile möglich.

Es ist überdies von Vorteil, wenn der Kupplungsmechanismus innerhalb eines Gehäuses, insbesondere eines stationären Gehäusetopfes, angeordnet ist, wobei die Spindel linear gegenüber dem Gehäuse verfahrbar ist. Dadurch wird eine kompakte Ausgestaltung möglich.

Das zweite drehbar gelagerte Kupplungselement kann vorteilhaft als eine Kupplungsscheibe ausgebildet sein, welche drehbar über Wälz- oder Gleitlager gegenüber dem stationären Gehäuse gelagert ist. Diese Lösung ist in geringem Maße störanfällig.

Das erste drehbar gelagerte Kupplungselement ist vorteilhaft drehbar über Wälz- oder Gleitlager in einer Ausnehmung des stationären Gehäuses, welche durch eine Innenwandung gebildet wird, gelagert.

Das erste und das zweite Kupplungselement weist vorteilhaft korrespondierende Kupplungsflächen auf, welche bei einer linearen Bewegung der Spindel in einer Richtung zueinander drehbar ausgebildet sind, wobei aufgrund der Gewindereibung in der Gewindeverbindung eine axiale Kraft entsteht, wodurch das Kupplungselement axial verschiebbar ist und dabei die Kupplungsflächen abhebt so dass das Kupplungselement drehbar - also entsperrt - ist und somit die lineare Bewegung der Spindel zulässt.

Bei linearer Bewegung der Spindel in Gegenrichtung erzeugt die Gewindereibung in der Gewindeverbindung vorzugsweise eine axiale Kraft, was die Kupplungsflächen zueinander drückt und somit die Drehung des Kupplungselements verhindert.

Diese Kraftübertragung ist besonders effizient, insbesondere zur Realisierung einer stufenlosen Kupplung. Diese kraftübertragende Verbindung wird durch die Bereitstellung der ersten Kupplung ermöglicht.

Es ist überdies von Vorteil, wenn das zweite und/oder dritte Kupplungselement mit einem Antriebselement, vorzugsweise einem Druckkolben, verbunden ist, welches innerhalb des Bremszylinders, vorzugsweise innerhalb des Gehäuses, geführt ist, wobei sich die Linearbewegung des Antriebselements, insbesondere des Druckkolbens, auf das zweite und/oder dritte Kupplungselement überträgt.

Das Gehäuse kann vorteilhaft einen hydraulischen oder pneumatischen Druckraum aufweisen mit einer Zuleitung eines Druckmediums, wobei der Druckraum bereichsweise durch die Stirnseite des Druckkolbens begrenzt ist. Dadurch wird eine Betätigung in konstruktiv kompakter und störungsunanfälliger Art und Weise realisiert.

Für eine einfache Rückstellung des Druckkolbens ist dieser bevorzugt federbeaufschlagt, so dass der Druckkolben mit einer Rückstellkraft beaufschlagt wird, welche der Richtung des Drucks des Druckmediums entgegenwirkt.

Bevorzugt ist, dass jeweils das zweite oder dritte Kupplungselement der zweiten Kupplung, welches nicht mit einem Antriebselement verbunden ist, axial gefedert, in Bezug auf die Spindelachse, gelagert ist.

Das zweite und das dritte Kupplungselement weist korrespondierende Kupplungsflächen auf, welche in aneinanderliegenden Zustand drehfest verbunden sind. Da eine Druckfeder durch einen Druckkolben das Kupplungselement vorspannt und wird eine definierte Drehmomentübertragung zwischen zweite und dritte Kupplungselemente ermöglicht.

Es ist überdies für die kompakte Anordnung von Vorteil, wenn das Gehäuse im Wesentlichen zylindrisch und coaxial zur Spindelachse der Spindel ausgebildet ist.

Die Sperrung der der linearen Bewegung des Betriebsbremskolbens in einer Richtung kann bei geschlossener erster und zweiter Kupplung stufenlos ausführbar sein, vorzugsweise durch Ausgestaltung der ersten und/oder zweiten Kupplung als Reibkupplung.

Insbesondere kann bei geöffneter zweiter Kupplung die Spindel in zwei Richtungen frei bewegbar sein, wobei das Kupplungselement durch die Gewindeverbindung drehbar ist und dass bei geschlossener Kupplung das Kupplungselement zusammen mit Kupplungselement drehbar ist, wobei die Kupplung zumindest temporär offen ist.

Besonders bevorzugt ist der Kupplungsmechanismus ein Bestandteil einer Feststellbremse.

Die Verriegelungsvorrichtung mit dem vorgenannten Kupplungsmechanismus kann vorteilhaft als stufenlose mechanische Kraftsperrvorrichtung bzw. Feststellbremse ausgebildet sein. Im gelösten bzw. entspannten Zustand, also wenn das zweite und dritte Kupplungselemente miteinander nicht verbunden sind, ist der Kupplungsmechanismus geeignet, die axiale Bewegung der Spindel relativ zum Gehäuse in beiden Richtungen zu ermöglichen. In diesem Fall sind erste und zweite Kupplungselemente geschlossen und drehen sich gemeinsam, angetrieben durch den axial bewegende Spindelgewinde. Im verriegelten bzw. gespannten Zustand, also wenn die zweiten und dritten Kupplungselemente miteinander verbunden sind, blockiert die Verriegelungsvorrichtung mit dem Kupplungsmechanismus die Bewegung der genannten Spindel in eine Richtung, z.B. in einer Richtung nach rechts, ermöglicht aber weiterhin ihre Bewegung in der entgegengesetzten Richtung, also z.B. in einer Gegenrichtung nach links.

Der entriegelte und verriegelte Zustand kann durch eine geeignete pneumatische, hydraulische, mechanische oder elektrische Vorrichtung gesteuert werden. Die Verbindung zwischen dem Kupplungselement und dem Druckkolben kann dabei starr oder elastisch oder temporär lösbar ausgebildet sein.

Weitere Vorteile, Merkmale und Einzelheiten der Erfindung ergeben sich aus der nachfolgenden Beschreibung, in der mehrere Ausführungsbeispiele der Erfindung anhand der beiliegenden Zeichnungen näher erläutert werden. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigen:
- Figur 1: Schnittansicht auf einen Kupplungsmechanismus eines erfindungsgemäßen Bremszylinders im geschlossenen Zustand; und
- Figur 2: Schnittansicht auf den Kupplungsmechanismus im gelösten Zustand.

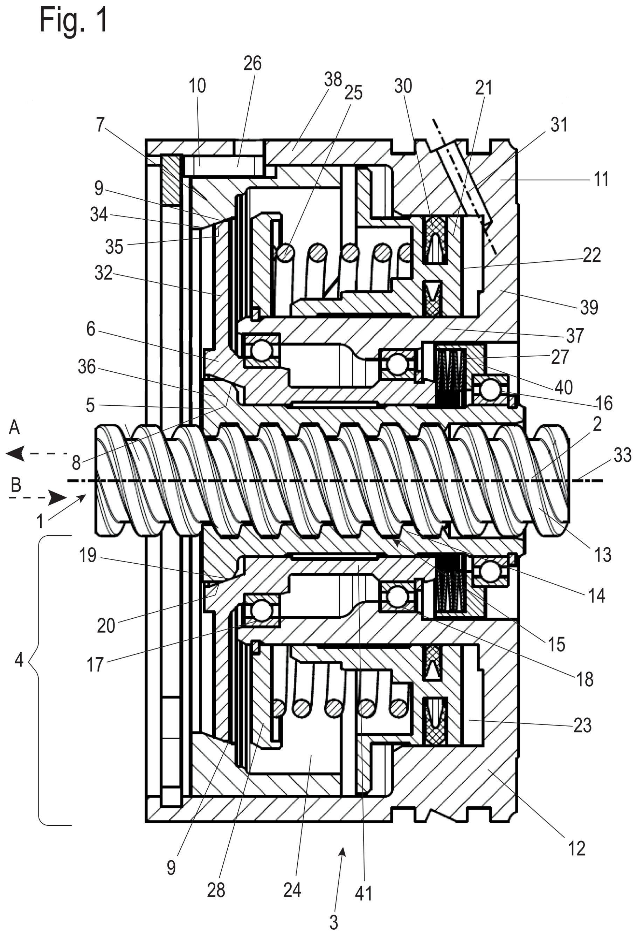

**Figur 1** zeigt ein Gehäuse 11 als Teil eines Bremszylinders mit einer darin angeordneten Verriegelungsvorrichtung 3 umfassend einen Spindelfortsatz 2 des Betriebsbremskolbens 1 einer Bremse für ein Fahrzeug, insbesondere für ein Schienenfahrzeug. Der Spindelfortsatz 2 steht beidseitig endständig aus dem Gehäuse 11 hervor.

Ein Kupplungsmechanismus 4 ist als Teil der Verriegelungsvorrichtung 3 zur mechanischen Bremskraftverriegelung der Betriebsbremse ausgebildet. Diese Verriegelungsvorrichtung 3 ermöglicht besonders bevorzugt eine Verriegelung der Linearbewegung der Spindel des Betriebsbremskolbens 1 in eine Richtung und damit die besagte Bremskraftverriegelung.

Die Verriegelungsvorrichtung 3 kann vorzugsweise als Teil einer Feststellbremse verstanden werden, wobei das Gehäuse 11 einen Gehäusetopf 12 aufweist, welcher in einen Druckraum 23 und einen Gehäuseinnenraum 24 unterteilt ist.

Innerhalb des Gehäuseinnenraumes 24 kann der mehrteiliger Koppelmechanismus 4 der Verriegelungsvorrichtung 3 angeordnet sein. Der Druckraum 23 des Gehäusetopfes 12 wird über eine Medienzuleitung 31 mit einem Druckmedium, z.B. Druckluft, beaufschlagt. Auch ein hydraulische Druckbeaufschlagung ist möglich, ebenso wie eine elektromotorische Betätigung und/oder eine mechanische Betätigung der Feststellbremse.

Der Betriebsbremskolben 1 überträgt bei einem Bremsvorgang eine Bremskraft auf ein Bremsgestänge des vorgenannten Schienenfahrzeuges. Bezüglich der weiteren Ausgestaltung des Bremszylinders und dessen bestimmungsgemäße Verwendung wird auf die EP 3 849 863 B1 Bezug genommen. Der Spindelfortsatz 2 definiert eine Spindelachse 33 und weist ein Gewinde 13 auf, welches in mit dem korrespondierenden Innengewinde 14 eines ersten Kupplungselements 5 eine Gewindeverbindung 15 eingeht.

Das erste Kupplungselement 5 ist als Gewindehülse ausgebildet. Sie weist einen umlaufenden Ringfortsatz 36 auf, der radial aus der Gewindehülse hervorsteht. Das Kupplungselement 5 ist über ein Wälzlager 16 im Gehäuse 11 gelagert. Hierzu weist der Gehäusetopf 12 eine ringförmige Innenwandung 37 und eine, vorzugsweise zylindrisch ausgebildete Außenwandung 38 coaxial zur ringförmigen Innenwandung 37 auf, welche über eine Stirnwandung 39 miteinander verbunden sind.

Die ringförmige Innenwandung 37 weist eine starr mit dem Gehäuse 11 verbundene Lagerbuchse 40 zur Lagerung einer Tellerfeder 27 auf, an welcher sich das Wälzlager 16 zur Lagerung des ersten Kupplungselements 5 abstützt.

Die Lagerbuchse 40 ist im vorliegenden Fall in der Bohrung der Gehäuses 11 mit großem Spiel gelagert. Das Kupplungselement 5 ist dabei lediglich in das Kupplungselement 6 radial geführt mit einfacher zylindrischer Spielpassung, vorzugsweise durch zwei Gleitlager, und axial geführt durch die Kupplung 8 und durch die Wälzlager 16. Diese Lagerung ist besonders vorteilhaft, wenn die Kupplung 8 als Zahnkupplung ausgebildet ist.

Alternativ kann allerdings auch die Lagerbuchse 40 in der Gehäusebohrung 37 radial geführt werden und das Kupplungselement 5 kann eigentlich durch die Kupplung 8 sowohl radial als auch axial geführt sein.

Die die ringförmige Innenwand 37, die Stirnwandung 39 und die Außenwandung 38 begrenzen den Druckraum 23, dessen Volumen durch Verschiebung eines linear verschiebbaren Druckkolbens 21 bzw. dessen Stirnfläche 22 variabel ist.

Der Druckkolben 21 ist zwischen der Innenwandung 37 und der Außenwandung 38 geführt und durch Dichtungen 30 gegenüber diesen Wandungen abgedichtet.

Das rotierbar um die Spindelachse 33 gelagerte erste Kupplungselement 5 weist am Ringfortsatz 36 eine Kupplungsfläche 19 auf, welches mit einer ersten, vorzugsweise konisch ausgebildeten, Kupplungsfläche 20 an einem zweiten Kupplungselement 6 in Kontakt steht. Der Kontakt kann je nach Kupplungszustand der Kupplungsvorrichtung 4 gleitend oder durch Kraftschluss, insbesondere Reibschluss, erfolgen. Bei Kraftschluss bildet sich zwischen den Kupplungsflächen 19, 20 eine geschlossene Kupplung 8 aus, so dass beide Kupplungselemente 5, 6 kraftschlüssig und somit fest miteinander verbunden sind.

Das zweite Kupplungselement 6 ist ebenfalls rotierbar gelagert. Die Lagerung erfolgt über zwei voneinander axial beabstandete Wälzlager 17, 18. Es weist eine sich radial erstreckende ringförmige Drehscheibe 32 und einen an der Drehscheibe 32 angeordneten Zylinderfortsatz 41 auf. Die erste Kupplungsfläche 20 ist innenseitig am Zylinderfortsatz 41 angeordnet. Die Drehscheibe 32 weist, vorzugsweise an der radial-äußeren Kante, eine zweite Kupplungsfläche 34 auf. Diese zweite Kupplungsfläche 34 ist in der dargestellten Ausführungsvariante konisch ausgebildet und korrespondiert mit einer ersten ebenfalls konischen Kupplungsfläche 35 eines dritten Kupplungselements 7. Die Kupplungsflächen 34, 35 sind im entkoppelten Zustand konzentrisch zueinander angeordnet, wobei zwischen den Kupplungsflächen 34, 35 ein Lüftspiel 29 vorgesehen ist.

Das dritte Kupplungselement 7 ist linear entlang der Außenwandung 38 und verschieblich im Gehäuse 11 angeordnet. Das Kupplungselement 7 kann einstückig mit dem Druckkolben 21 ausgebildet sein, so dass eine Verschiebung des Kupplungselements 7 zugleich zu einer Verschiebung des Druckkolbens 21 führt. Das dritte Kupplungselement 7 ist drehgesichert gegenüber dem Gehäuse 11 angeordnet, vorzugsweise durch eine Passfeder 26.

Die ringförmige Innenwandung 37 weist ein radiales Abstützelement 28 auf, welches vorzugsweise endständig und ebenfalls vorzugsweise als Scheibe ausgebildet ist.

Der Druckkolben 21 ist ringförmig ausgebildet. Jenseits des Druckraumes 23 ist zwischen dem Abstützelement 28 und dem Druckkolben 21 eine Feder 25, vorzugsweise eine Spiralfeder, angeordnet, welche eine Rückstellkraft gegen einen im Druckraum 23 aufgebauten Druck aufbaut. Die Spiralfeder 25 wirkt auf den Druckkolben 21 und schließt somit die zweite Kupplung 9, insbesondere eine Reibkupplung, zwischen dem zweiten und dritten Kupplungselement 6, 7 aus.

Das zweite Kupplungselement 6 ist ebenfalls in axialer Richtung in Bezug auf die Spindelachse 33 federgelagert. Die entsprechende Federlagerung wird durch eine Tellerfeder oder ein Tellerfederpaket 27 ermöglicht. Bei Erzeugung der zweiten Kupplung 6 soll eine Verformung oder eine mechanische Schädigung der Drehscheibe 32 durch übermäßige Zuspannkräfte verhindert werden. Dies wird durch die federnde Lagerung durch die besagte Tellerfeder 27 gewährleistet. Außerdem wird durch die Tellerfeder oder das Tellerfederpaket die Kupplungsfläche 8 mit einer gewissen Kraft geschlossen gehalten und erst bei einer gewissen Spindelkraft geöffnet. Allerdings wird auch dann der Kupplungsspalt 8 annähernd bei Null gehalten.

In **Figur 1** ist die zweite Kupplung 8 geschlossen und der Druckraum 23 wird belüftet.

Die Feder 25 schließt die zweite Kupplung 9, indem sie das dritte Kupplungselement 7 durch den Druckkolben 21 gegen das zweite Kupplungselement 6 zieht. Da die Drehung des dritten Kupplungselements 7 durch die Passfeder 26 am Gehäuse 11 blockiert ist, ist auch die Drehung des inneren ersten Kupplungselements 5 blockiert.

Bei linearer Bewegung des Spindelfortsatzes 2 in Richtung B wirken Axialkräfte der Spindel auf die erste Kupplung 8 in Schließrichtung. Da beide Kupplungen 8, 9 geschlossen sind, wird die Bewegung der Spindel in dieser Richtung blockiert.

Bei linearer Bewegung des Spindelfortsatzes 2 in Richtung A wirken Axialkräfte der Spindel auf die erste Kupplung in Öffnungsrichtung und zwingend die erste Kupplung 8 in die geöffnete Position. Das radial innere erste Kupplungselement 5 rotiert auf der Spindel relativ zum starr angeordneten Gehäuse 11. Die Bewegung der Spindel in dieser Richtung ist daher möglich.

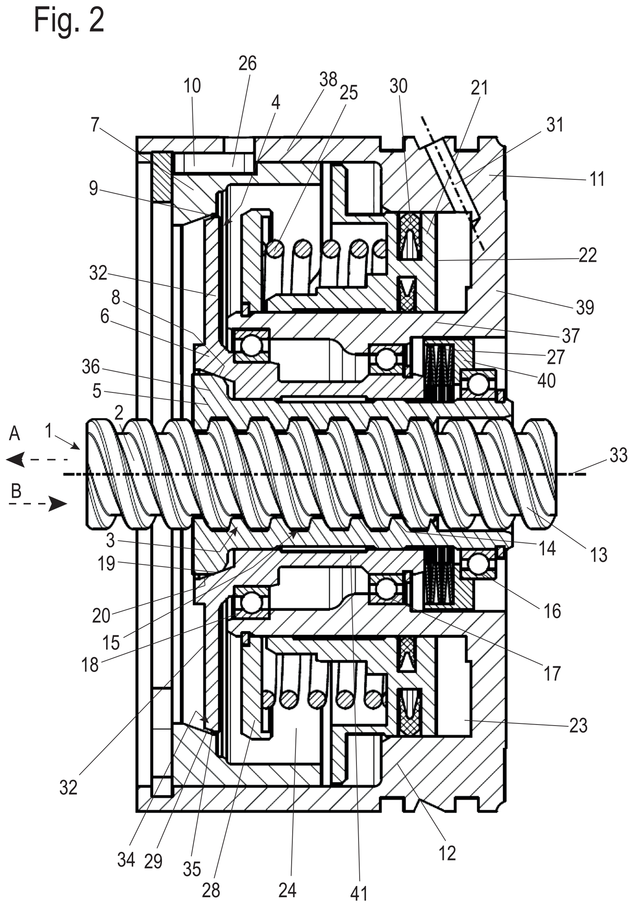

**Figur 2** zeigt die Anordnung der Feststellbremse der Figur 1 im gelösten Zustand. Der Spindelfortsatz 2 ist mit dem ersten Kupplungselement 5 des Kupplungsmechanismus 4 durch eine nicht selbstsichernde Gewindeverbindung 15 verbunden. Die axiale Bewegung der Spindel im Gehäuse 11 ist möglich, wenn sich das erste Kupplungselement 5 der ersten Kupplung 8 relativ zum Gehäuse 11 drehen kann.

Im gelösten Zustand ist der Druckraum 23 und der Druckkolben 21 mit Druck beaufschlagt. Die Feder 25 des dritten Kupplungselements 7 wird durch den Druckkolben 21 zusammengedrückt. Das dritte Kupplungselement 7 der zweiten Kupplung 9 kann sich im Gehäuse 11 in axialer Richtung bewegen. Zum Öffnen der zweiten Kupplung 9 wird die Federkraft der Feder 25 durch den Druck auf den Druckkolben 21 überwunden, so dass sich die Kupplungsfläche 35 des dritten Kupplungselements 7 von der Kupplungsfläche 34 des zweiten Kupplungselements 6 abhebt und die zweite Kupplung 9 dadurch geöffnet wird. In dem Fall wird kein Drehmoment übertragen. Folglich kann sich das erste und das zweite Kupplungselement 5, 6 relativ zum Gehäuse 11 drehen, obwohl die erste Kupplung 8 geschlossen ist, da die Tellerfeder 27 die Kupplung 8 geschlossen hält. Die Spindel kann sich daher in beide Richtungen bewegen. Die Feststellung des Betriebsbremskolbens 1 ist aufgehoben.

Die vorgenannte Variante weist ein Zusammenspiel aus zwei konischen Reibungskupplungen 8, 9 auf. Allerdings kann die dargestellte Art der Doppelkupplung aber viele Arten von Kupplungen sind geeignet. Beispiele hierfür sind eine oder mehrere Kupplungen umfassend zumindest eine Scheibenkupplung, Mehrscheibenkupplung, Axialkupplung, Radialkupplung, Kegelradkupplungen, Reibungskupplung insbesondere mit axial hervorstehender Zahnung.

Die Steuerung und/oder Betätigung der zweiten Kupplung 9 kann durch eine geeignete pneumatische, hydraulische, mechanische oder elektrische Vorrichtung erfolgen.

Die Steuerung des Öffnungszustands der zweiten Kupplung 9 kann monostabil oder bistabil sein.

Der erfindungsgemäße Bremszylinder 1 stellt das Parken von kompakten Bremssattel-Einheiten sicher. Ihre Aufgabe ist es, die Kraft der Betriebsbremse für die Zwecke der Feststellbremse zu sperren. Insofern wirkt die vorbeschriebene Verriegelungsvorrichtung 3 als Feststellbremse. Wegen möglicher thermischer Schrumpfung muss der Betriebsdruck für eine bestimmte Zeit aufrechterhalten werden, während die freie Bewegung der Spindel in Bremsrichtung unerlässlich ist.

Neuere Konstruktionen für diese Funktion basieren zumeist auf einer Kombination aus Klinken und Zahnrädern. Ein ähnliches, nicht selbstsperrendes Gewinde dreht ein Zahnrad, das im gesperrten Zustand durch eine Sperrklinke blockiert wird. Die asymmetrische Verzahnung von Sperrklinke und/oder Zahnrad ermöglicht es dem Zahnrad, die Sperrklinke in einer Richtung anzuheben, so dass eine freie Bewegung in Bremsrichtung möglich ist. Die Klinke ist dabei verschwenkbar angeordnet und ist nicht linear verschiebbar angeordnet.

Die in Fig. 1 und 2 dargestellte Variante ermöglicht ein stufenloses Feststellen der Bewegung des Betriebsbremskolbens 1 in eine Drehrichtung des Spindelfortsatzes 2. Im Gegensatz zu früheren Konstruktionen wird bei der stufenlosen Arretierung ein Feststellen mit geringerem Hubverlust realisiert. Außerdem ist die Lösekraft weitgehend unabhängig von der axialen Belastung, während bei der Konstruktion mit Sperrklinke die Lösekraft deutlich höher sein kann, wenn unter Last gelüftet wird.

### Bezugszeichenliste

- 1: Betriebskolben
- 2: Spindelfortsatz
- 3: Verriegelungsvorrichtung
- 4: Kupplungsmechanismus
- 5: Kupplungselement
- 6: Kupplungselement
- 7: Kupplungselement
- 8: Kupplung
- 9: Kupplung
- 10: Drehsicherung
- 11: Gehäuse
- 12: Gehäusetopf
- 13: Gewinde
- 14: Innengewinde
- 15: Gewindeverbindung
- 16: Wälzlager
- 17: Wälzlager
- 18: Wälzlager
- 19: Kupplungsfläche
- 20: Kupplungsfläche
- 21: Druckkolben
- 22: Stirnseite
- 23: Druckraum
- 24: Innenraum
- 25: Feder
- 26: Passfeder
- 27: Tellerfeder
- 28: Abstützelement
- 29: Lüftspiel
- 30: Dichtung
- 31: Medienzuleitung
- 32: Drehscheibe
- 33: Spindelachse
- 34: Kupplungsfläche
- 35: Kupplungsfläche
- 36: Ringfortsatz
- 37: Innenwandung
- 38: Außenwandung
- 39: Stirnwandung
- 40: Lagerbuchse
- 41: Zylinderfortsatz

## Patentansprüche

1. Bremszylinder, insbesondere für Schienenfahrzeuge, mit einem innerhalb eines Gehäuses (11) axial bewegbaren Betriebsbremskolben (1), wobei der Betriebsbremskolben (1) einen Spindelfortsatz (2) mit einem Gewinde (13) als Teil einer axial bewegbaren Spindel aufweist, wobei der Bremszylinder einen Verriegelungsvorrichtung (3) zur Bremskraftverriegelung mit einem Kupplungsmechanismus (4) mit zumindest zwei Kupplungen (8, 9) aufweist, wobei der Betriebsbremskolben (1) über eine Gewindeverbindung (15) mit einem ersten drehbar gelagerten Kupplungselement (5) des Kupplungsmechanismus (4) verbunden ist,
welches durch eine erste der zwei Kupplungen (8) mit einem zweiten drehbar gelagerten Kupplungselement (6) des Kupplungsmechanismus (4) verbindbar ist,
wobei das besagte zweite drehbar gelagerte Kupplungselement (6) durch die zweite der zwei Kupplungen (9) mit einem dritten Kupplungselement (7) verbindbar ist,
**dadurch gekennzeichnet, dass** das zweite und dritte Kupplungselement (6, 7) derart ausgebildet sind, dass die Verbindung beider Kupplungselemente (6, 7) unter Ausbildung der zweiten Kupplung (9) durch Linearverschiebung zumindest eines der beiden Kupplungselemente (7) gegenüber dem anderen Kupplungselement (6) erfolgt.

2. Bremszylinder nach Anspruch 1, **dadurch gekennzeichnet, dass** das dritte Kupplungselement (7) als ein linear verschiebbar gelagertes, vorzugsweise verdrehgesichertes, Kupplungselement (7) ausgebildet ist.

3. Bremszylinder nach einem der vorhergehenden Ansprüche, **dadurch gekennzeichnet, dass** das erste drehbar gelagerte Kupplungselement (5) eine Hülse mit einem Innengewinde (14) aufweist, welche gemeinsam mit dem Gewinde (13) des Spindelfortsatzes (2) die Gewindeverbindung (15) bildet, wobei die Gewindeverbindung (15) als eine nicht-selbsthemmende Gewindeverbindung ausgebildet ist.

4. Bremszylinder nach einem der vorhergehenden Ansprüche, **dadurch gekennzeichnet, dass** der Kupplungsmechanismus (4) innerhalb eines Gehäuses (11), insbesondere eines stationären Gehäusetopfes (12), angeordnet ist, wobei die Spindel linear gegenüber dem Gehäuse (11) verfahrbar ist.

5. Bremszylinder nach einem der vorhergehenden Ansprüche, **dadurch gekennzeichnet, dass** das zweite drehbar gelagerte Kupplungselement (6) eine Drehscheibe (32) aufweist, welche drehbar über eines oder mehrere Wälz- oder Gleitlager (17, 18) gegenüber dem stationären Gehäuse (11) gelagert ist.

6. Bremszylinder nach einem der vorhergehenden Ansprüche, **dadurch gekennzeichnet, dass** das erste drehbar gelagerte Kupplungselement (5) drehbar über Wälz- oder Gleitlager (16) gegenüber einer Innenwandung (37) des stationären Gehäuses (11) gelagert ist.

7. Bremszylinder nach einem der vorhergehenden Ansprüche, **dadurch gekennzeichnet, dass** das erste und das zweite Kupplungselement (5, 6) korrespondierende Kupplungsflächen (19, 20) aufweisen, welche bei einer linearen Bewegung der Spindel in einer Richtung zueinander drehbar ausgebildet sind, wobei aufgrund der der Gewindereibung in der Gewindeverbindung (15) eine axiale Kraft entsteht, wodurch das Kupplungselement (5) axial verschiebbar ist und dabei die Kupplungsflächen (19, 20) abhebt so dass das Kupplungselement (5) drehbar ist und somit die lineare Bewegung der Spindel zulässt.

8. Bremszylinder nach einem der vorhergehenden Ansprüche, **dadurch gekennzeichnet, dass** das zweite und/oder dritte Kupplungselement (6, 7) mit einem Antriebselement, vorzugsweise einem Druckkolben (21), verbunden ist, welcher innerhalb des Bremszylinders, vorzugsweise innerhalb des Gehäuses (11), geführt ist, wobei sich die Linearbewegung des Antriebselements, insbesondere des Druckkolbens (21), auf das zweite und/oder dritte Kupplungselement (6, 7) überträgt.

9. Bremszylinder nach einem der vorhergehenden Ansprüche, **dadurch gekennzeichnet, dass** das Gehäuse (11) einen hydraulischen oder pneumatischen Druckraum (23) aufweist mit einer Medienzuleitung (31) eines Druckmediums, wobei der Druckraum (23) bereichsweise durch die Stirnseite (22) des Druckkolbens (21) begrenzt ist.

10. Bremszylinder nach einem der vorhergehenden Ansprüche, **dadurch gekennzeichnet, dass** der Druckkolben (21) federgelagert ist, so dass der Druckkolben (21) mit einer Rückstellkraft beaufschlagt wird, welche der Richtung des Drucks des Druckmediums entgegenwirkt.

11. Bremszylinder nach Anspruch 9, **dadurch gekennzeichnet, dass** das jeweilige zweite oder dritte Kupplungselement (6, 7) der zweiten Kupplung (9), welches nicht mit einem Antriebselement verbunden ist, axial gefedert, in Bezug auf die Spindelachse (33), gelagert ist.

12. Bremszylinder nach einem der vorhergehenden Ansprüche, **dadurch gekennzeichnet, dass** das zweite und das dritte Kupplungselement (6, 7) korrespondierende Kupplungsflächen (34, 35) aufweisen, welche in einem aneinanderliegenden Zustand drehfest und kraftschlüssig verbindbar sind.

13. Bremszylinder nach einem der vorhergehenden Ansprüche, **dadurch gekennzeichnet, dass** das Gehäuse (11) im Wesentlichen zylindrisch und coaxial zur Spindelachse (33) der Spindel ausgebildet ist.

14. Bremszylinder nach einem der vorhergehenden Ansprüche, **dadurch gekennzeichnet, dass** bei geöffneter zweiter Kupplung (9) die Spindel in zwei Richtungen frei bewegbar ist, wobei das Kupplungselement (5) durch die Gewindeverbindung (15) drehbar ist und dass bei geschlossener Kupplung (8) das Kupplungselement (6) zusammen mit Kupplungselement (5) drehbar ist, wobei die Kupplung (8) zumindest temporär offen ist.

15. Bremszylinder nach einem der vorhergehenden Ansprüche, **dadurch gekennzeichnet, dass** der Kupplungsmechanismus (4) ein Bestandteil einer Feststellbremse ist.
